# FASCICULE DE BREVET EUROPEEN

(11) **EP 2 005 011 B1**
(45) Date de publication et mention de la délivrance du brevet: **11.05.2016**
(21) Numéro de dépôt: 07731178.5
(22) Date de dépôt: 23.03.2007
(51) Int. Cl.: F16B 5/06

(54) **ASSEMBLAGE D'ANGLE COMPORTANT UN ELEMENT MALE PREFORME SELON UN ANGLE PREDETERMINE ET BORDE PAR DES RETOURS**
EIN IN EINEN BESTIMMTEN WINKEL VORGEFORMTES UND DURCH RÜCKSPRÜNGE BEGRENZTES STECKELEMENT UMFASSENDE ECKANORDNUNG
CORNER ASSEMBLY COMPRISING A MALE ELEMENT PREFORMED TO A PREDETERMINED ANGLE AND BORDERED BY RETURNS

(30) Priorité: 31.03.2006 FR 0602780
(43) Date de publication de la demande: 24.12.2008
(73) Titulaire: Credilor, 54000 Nancy (FR)
(72) Inventeur: KONDOLFF, Richard, F-54000 NANCY (FR)
(74) Mandataire: Rhein, Alain
(86) Numéro de dépôt international: PCT/FR2007/000489
(87) Numéro de publication internationale: WO 2007/118953

(56) Documents cités:
- EP-A1- 1 035 334
- FR-A- 1 084 079
- US-A- 3 235 118

## Description

La présente invention concerne un nouveau procédé d'assemblage pour des matériaux de construction par exemple mais non limitativement pour des locaux d'habitation.

Les dispositifs d'assemblage connus actuellement dans le domaine de la construction bois par exemple pour assembler des pièces en bout, selon une angulation prédéterminée, nécessitent tous l'usage de vis, de clous ou de colles, complétés le cas échéant par des embrèvements, pièce par pièce.

Par exemple, on connaît des dispositifs en forme d'équerre à visser à l'intérieur du coin formé par deux pièces à solidariser.

Le but de la présente invention est de réaliser un dispositif d'assemblage en bout et selon un angle prédéterminé non limitativement 90° pour des matériaux de construction du type madriers, poutres ou autres éléments rigides allongés, qui réalise un auto-serrage de l'assemblage sans nécessiter aucun moyen supplémentaire tel que vis ou autre.

L'art antérieur cite les documents D₁ FR 1 084 079 ; D₂ US 3 235 118.

Le document FR 1 084 079 décrit un profilé pour l'assemblage de panneaux. La fonction d'auto-serrage transversal de l'assemblage par élasticité n'est pas connue de ce document. En outre, un blocage longitudinal est nécessaire et il est réalisé par des pattes prévues aux extrémités du profilé et qui sont repliées à 90° après assemblage de deux panneaux voisins.

Le document US 3 235 118 concerne également un assemblage pour panneaux ou plaques, ou un assemblage d'encadrement de panneaux : un blocage des profilés verticaux est prévu dans les profilés inférieurs. La fonction d'auto-serrage par élasticité n'est pas non plus connue de ce document.

Le procédé d'assemblage selon l'invention réalise à lui seul les fonctions d'assemblage et d'auto-serrage, sans intervention de moyens annexes (vis, collages ou autres).

Plus particulièrement l'invention consiste en un procédé selon la revendication 1.

De façon préférentielle, l'angle (α) est inférieur de 5° environ par rapport à l'angle (β).

Selon une variante de réalisation les éléments assemblés sont deux madriers et la hauteur de l'élément mâle est inférieure à la hauteur d'un madrier.

Selon une autre variante de réalisation les éléments assemblés sont des façades d'habitation telle qu'une façade formée d'un empilage de madriers, et l'élément mâle est sensiblement de la hauteur de la façade.

L'invention concerne également un éiément mécanique, caractérisé en ce qu'il est un élément préformé comportant deux ailes planes solidaires et formant entre-elles un angle prédéterminé (α) de façon à former une sorte d'équerre, dont chaque aile présente une hauteur prédéterminée (h) et comporte à chaque extrémité un retour à 90° vers l'intérieur de l'angle (α) également préformé, et caractérisé en ce qu'il est conçu pour la réalisation d'un assemblage du type ci-dessus, l'angle (α) étant inférieur à l'angle (β) de l'assemblage à réaliser.

L'invention vise préférentiellement mais non limitativement le domaine de la construction d'habitations de type bois par empilement de madriers ou de poutres, elle peut également s'appliquer à la construction de locaux industriels, de parois de piscines, d'abris de jardins etc...

On comprendra mieux l'invention à l'aide de la description ci-après faite en référence aux figures annexées suivantes :
- figure 1 : vue générale d'un assemblage d'angle selon l'invention,
- figure 2 : vue en coupe transversale d'un assemblage en équerre de 4 madriers, montré à titre d'exemple non limitatif,
- figure 3 : vue partielle d'un assemblage d'angle de deux madriers avec un élément mâle de hauteur inférieure à celle des madriers, les madriers étant coupés en biseau,
- figure 4 : vue partielle d'une façade de chalet,
- figure 5 : vue partielle d'une variante d'assemblage de madriers.

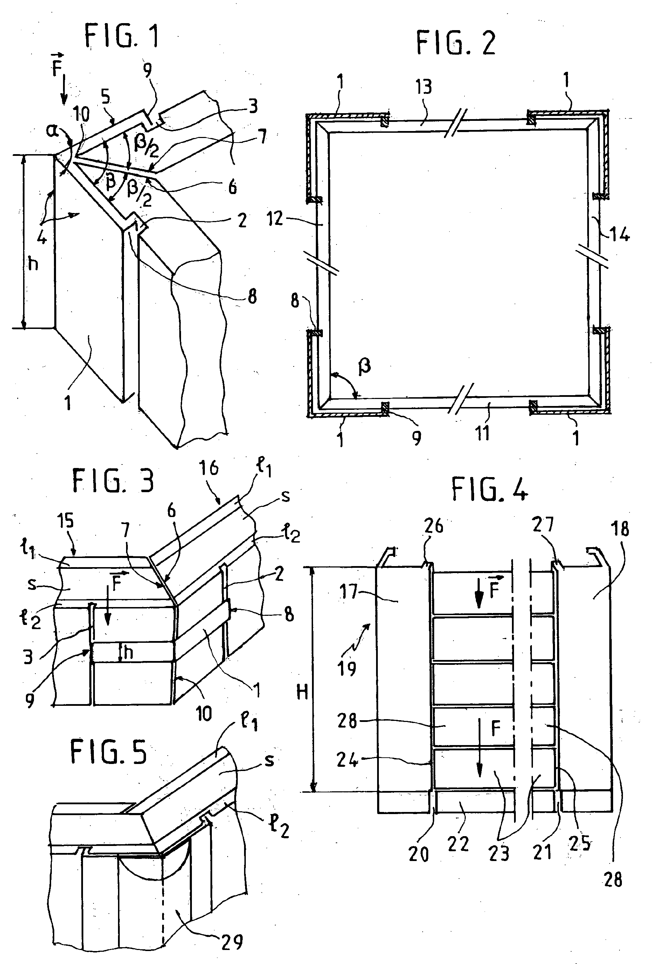

On se rapporte d'abord aux figures 1 à 2 pour expliquer l'invention dans son principe.

Un dispositif d'assemblage selon l'invention est formé d'un élément mécanique mâle (1) préformé venant s'engrener dans les rainures (2, 3) des pièces à solidariser, et extérieurement à l'angle d'assemblage.

Les pièces à assembler, par exemple sur les figures 1 à 2, des madriers en bois ou en béton ou autre matériau, comportent toutes parallèlement à une au moins de leurs bordures d'extrémités, une rainure d'assemblage (2, 3) formant rail de guidage. Les bordures d'extrémités sont en outre usinées en biseau (6, 7) selon un angle (β/2) sur la face ne comportant pas la rainure pour réaliser un angle d'assemblage (β).

L'élément mécanique mâle (1) est un élément préformé comportant deux ailes planes (4, 5) solidaires et formant entre-elles un angle de pliage prédéterminé (α) de façon à former une sorte d'équerre.

Chaque aile présente une hauteur prédéterminée (h) et comporte à chaque extrémité un retour (8, 9) à 90° dirigé vers l'intérieur de l'angle (α), également préformé.

Pour réaliser un auto-serrage de l'assemblage, l'angle préformé (α) est inférieur de quelques degrés (par exemple de 5°) à l'angle de l'assemblage (β) à réaliser, ce qui confère à l'élément mécanique mâle (1) une élasticité, et à l'assemblage sa résistance mécanique, et sa fonction d'auto-serrage.

Pour réaliser l'assemblage on procéde comme suit :
- on forme l'angle d'assemblage (β) en plaquant les biseaux (6, 7) l'un contre l'autre, les rainures (2, 3) étant disposées sur les faces externes de l'angle d'assemblage parallèlement à l'arête (10) dudit angle d'assemblage,
- puis on encastre les retours (8, 9) de l'élément mécanique mâle (1) dans les rainures (2, 3) par un mouvement de translation parallèlement à l'arête de l'assemblage ou aux rainures (flèche F̅), celui-ci coulissant par frottement doux jusqu'à fermeture complète de l'assemblage lorsque la totalité de la longueur (h) est engagée dans les rainures.

A titre d'exemple, la figure 2 montre en coupe transversale un assemblage de quatre madriers (11, 12, 13, 14) tous assemblés en équerre les uns par rapport aux autres, au moyen de 4 éléments mâles tels que (1) réalisés chacun par exemple dans une tôle d'acier pliée selon un angle (α) inférieur à 90°, préférentiellement 85°, et possédant chacun deux retours (8, 9) à 90°.

On peut également prévoir une section transversale de l'élément mâle conformée en arc de cercle dont chaque extrémité comporte un retour.

On se rapporte à présent aux figures 3 à 5 pour décrire une application de l'invention au domaine du bâtiment, et plus particulièrement à la construction d'habitations du type bois.

La figure 3 représente, à titre d'exemple, un angle d'assemblage de deux madriers (15, 16) à structure composite, de type connu, composé de deux longerons (ℓ1, ℓ2) de bois séparés par une structure centrale (s) en polystyrène.

Les extrémités des madriers sont conformées en biseaux (6, 7) à 45° pour former un angle d'assemblage à 90°, et comportent chacune sur leur face externe une rainure (2 ou 3) parallèle à l'arête (10) de l'angle d'assemblage.

L'élément mécanique mâle (1) est une pièce de tôle de hauteur (h) inférieure à la hauteur d'un madrier, préformée à 90° et possédant comme précédemment deux retours (8, 9). Cet élément mécanique mâle peut comme précédemment être glissé dans les rainures (2, 3) jusqu'à une position médiane sur la hauteur du madrier.

La figure 4 représente deux angles d'un local d'habitation ou d'un local industriel et la méthode de mise en place des madriers constituant une façade dudit local.

Tout d'abord, deux éléments mécaniques mâles (17, 18) métalliques préformés et sensiblement de la hauteur (H) de la façade (19) sont mis en place verticalement dans les rainures verticales (20, 21) situées à chaque extrémité d'une lisse horizontale (22) servant de base à la construction.

Puis un premier madrier (23) est introduit par le haut et ses rainures (24, 25) engagées dans les retours (26, 27) de deux éléments mécaniques (17, 18), puis le madrier est glissé vers le bas (flèche F̅) jusqu'à contact avec la lisse horizontale (22) (voir figure 4).

Ensuite on recommence l'opération avec un deuxième madrier (28) qui viendra se poser au-dessus du madrier (23) et ainsi de suite pour tous les madriers devant former la hauteur de la façade (19) par empilage.

On opère de la même façon et successivement pour toutes les façades du local.

Dans cette application à la construction de chalets représentée à la figure 4, un élément mâle (17, 18) à la propriété de s'appliquer contre les faces extérieures des madriers pour réaliser l'étanchéité et la protection de l'angle d'assemblage, cette propriété sera d'autant mieux réalisée que l'élément mâle sera préformé selon un angle de pliage (α) inférieur de quelques degré par rapport à l'angle d'assemblage (β). En face inférieure ou supérieure des madriers on peut prévoir des systèmes d'engagement à rainures (non représentés ici car connus de l'état de la technique).

Ce procédé permet de construire très rapidement des habitations, ce qui en diminue leur coût et présente un grand intérêt dans le domaine des habitations de loisir et/ou pour la reconstruction en urgence dans des zones sinistrées.

Ce procédé s'applique également à la construction de toutes sortes de locaux, par exemple à usage industriels, à usage agricoles, des abris de jardin, des piscines bois ou autres...

L'assemblage n'est pas limité à un assemblage à 90°, le même procédé de construction permet, pour des piscines par exemple des constructions à plan hexagonal ou octogonal (β = 60°, β = 48°).

En variante de réalisation on peut prévoir à l'extérieur et le long de l'arête de l'élément mâle, un second profilé (29) à section en arc de cercle pouvant servir à l'écoulement des eaux de pluie depuis la gouttière de toiture jusqu'au sol (figure 5).

Une variante d'assemblage peut être prévue, (voir figure 5) selon laquelle le biseau est prévu sur les longerons externes (ℓ2) et sur la structure centrale (s), mais avec des longerons internes (ℓ1) assemblés à angle droit (figure 5).

A titre d'exemple, pour une construction d'un étage de façade on peut utiliser des éléments mâles en tôle pliée d'épaisseur allant de 0,8 à 2 mm, mais l'élément mâle n'est pas obligatoirement métallique.

L'absence totale de clous, vis, boulons, pour maintenir l'assemblage fait qu'il n'existe aucun pont thermique entre l'extérieur et l'intérieur de la façade.

Ce procédé de construction permet de prévoir bien entendu des fenêtres, des portes et toute ouverture nécessaire en façade.

Cet assemblage permet également d'assembler des matériaux tout bois, des plaques de béton, de granit ou autres.

La construction peut être livrée sous forme de kit avec l'ensemble des madriers, huisseries, éléments d'angle nécessaires à la réalisation d'un plan donné.

## Revendications

1. Procédé, dans le domaine du bâtiment, de construction de locaux ou de murs dont les façades sont constituées de madriers horizontaux empilés les uns au dessus des autres, **caractérisé en ce que** :
- tout d'abord, deux éléments mécaniques mâles (17, 18) métalliques préformés et sensiblement de la hauteur (H) d'une façade (19) sont mis en place verticalement à chaque extrémité d'une lisse horizontale (22) servant de base à la construction,
- puis un premier madrier (23) est introduit par le haut avec des rainures (24, 25) engagées dans des retours (26, 27) des deux éléments mécaniques (17, 18), puis le madrier est glissé vers le bas (flèche F) jusqu'à contact avec la lisse horizontale (22),
- ensuite on recommence l'opération avec un deuxième madrier (28) qui viendra se poser au dessus du premier madrier (23) et ainsi de suite pour tous les madriers devant former la hauteur de la façade (19) par empilage,
- on opère de la même façon et successivement pour toutes les façades ou murs à réaliser,
les madriers d'une façade étant assemblés aux madriers d'une façade voisine par un assemblage du type formé :
- d'une part, d'une construction présentant, en section transversale, au moins un angle (β) d'arête (10) s'étendant perpendiculairement au plan de la section transversale, et présentant sur chaque face extérieure de l'angle (β) une rainure (2, 3, 24, 25, 30, 31) parallèle à l'arête (10),
- d'autre part, d'un élément mâle préformé dont la section transversale est ouverte, ledit élément mâle préformé présentant sur sa hauteur et le long de chacune de ses bordures d'extrémités un retour (8, 9, 26, 27, 32, 33) également préformé et engagé chacun dans une rainure (2, 24, 30, 3, 25, 31) de la construction, ladite section transversale étant conformée de façon à orienter lesdits retours vers les rainures vers des faces extérieures de l'angle (β)
et la construction étant obtenue par la réunion de deux éléments assemblés en bout et dont les extrémités à assembler sont usinées au moins partiellement en biseau d'angle (β/2) et d'autre part l'élément mâle (11) comportant deux ailes planes (4, 5) solidaires et formant entre-elles un angle prédéterminé (α) de façon à former une sorte d'équerre, chaque aile présentant une hauteur prédéterminée (h,H) et comportant sur chaque bordure d'extrémité un retour (8, 9) également préformé à 90° dirigé vers l'intérieur de l'angle (α), l'angle (α) étant inférieur à l'angle (β).

2. Procédé selon la revendication 1, **caractérisé en ce que** l'angle (α) est inférieur de 5° environ par rapport à l'angle (β).

3. Procédé selon l'une des revendications précédentes, **caractérisé en ce que** les éléments assemblés sont deux madriers et **en ce que** la hauteur (h) de l'élément mâle est inférieure à la hauteur d'un madrier.

4. Procédé selon l'une des revendications 1 à 2, **caractérisé en ce que** les éléments assemblés sont des façades (19) formée d'un empilage de madriers, et **en ce que** l'élément mâle est sensiblement de la hauteur de la façade.

## Patentansprüche

1. Verfahren, im Bereich der Bauarbeit, der Herstellung von Betriebsräumen oder Wänden, deren Fassaden aus übereinander gestapelten horizontalen Bohlen gebildet sind, **dadurch gekennzeichnet, dass**:
- zunächst zwei vorgeformte metallische männliche mechanische Elemente (17, 18) mit im wesentlichen der Höhe (H) einer Fassade (19) vertikal an jedem Ende einer horizontalen Schiene (22), die als Basis für das Gebäude dient, angebracht werden,
- dann wird eine erste Bohle (23) von oben eingeführt, mit in Umbiegungen (26, 27) der zwei mechanischen Elemente (17, 18) eingeführten Nuten (24, 25), danach wird die Bohle nach unten geschoben (Pfeil F) bis sie mit der horizontalen Schiene (22) in Berührung steht,
- danach wird der Vorgang mit einer zweiten Bohle (28) wiederholt, die auf der ersten Bohle (23) liegen wird, und so weiter für alle Bohlen, die die Höhe der Fassade (19) durch Aufeinanderstapelung bilden müssen,
- man geht auf derselben Weise und nacheinander vor für alle herzustellende Fassaden oder Wände,
wobei die Bohlen einer Fassade mit den Bohlen einer benachbarten Fassade zusammengefügt werden, mittels einer Zusammenfügung der wie folgt gebildeten Art:
- einerseits aus einer Konstruktion, die im Querschnitt mindestens einen Winkel (β) der Kante (10) aufweist, der sich senkrecht zur Ebene des Querschnitts erstreckt, und auf jeder Außenfläche des Winkel (β) eine parallel zur Kante (10) verlaufende Nut (2, 3, 24, 25, 30, 31) aufweist,
- andererseits aus einem vorgeformten männlichen Element, dessen Querschnitt offen ist, wobei das besagte vorgeformte männliche Element über seine Höhe und entlang jeder seiner Endrandbereiche eine Umbiegung (8, 9, 26, 27, 32, 33) aufweist, die ebenfalls vorgeformt und jeweils in einer Nut (2, 24, 30, 3, 25, 31) des Bauwerks eingeführt ist, wobei der besagte Querschnitt so geformt ist, dass die besagten Umbiegungen zu den Nuten zu Außenflächen des Winkels (β) hin gerichtet werden,
und wobei die Konstruktion durch die Vereinigung von zwei an den Enden verbundenen Elementen erhalten wird, und deren zu verbindende Enden zumindest teilweise schräg im Winkel (β/2) bearbeitet sind, und andererseits das männliche Element (11) zwei fest mit einander verbundene flache Flügel (4, 5) umfasst, die zwischen ihnen einen vorbestimmten Winkel (α) bilden, so dass eine Art Winkeleisen gebildet wird, wobei jeder Flügel eine vorbestimmte Höhe (h, H) aufweist und an jedem Endrandbereich eine ebenfalls vorgeformte 90°-Umbiegung (8, 9) umfasst, die zum Inneren des Winkels (α) hin gerichtet ist, wobei der Winkel (α) kleiner ist als der Winkel (β).

2. Verfahren nach Anspruch 1, **dadurch gekennzeichnet, dass** der Winkel (α) in Bezug auf den Winkel (β) um 5° kleiner ist.

3. Verfahren nach einem der vorhergehenden Ansprüche, **dadurch gekennzeichnet, dass** die zusammengebauten Elemente zwei Bohlen sind und dass die Höhe (h) des männlichen Elements kleiner ist als die Höhe einer Bohle.

4. Verfahren nach einem der Ansprüche 1 bis 2, **dadurch gekennzeichnet, dass** die zusammengefügten Elemente Fassaden (19) sind, die aus einer Aufstapelung von Bohlen gebildet sind, und dass das männliche Element im wesentlichen die Höhe der Fassade hat.

## Claims

1. A method, in the field of the building, the construction of premises or walls the fronts of which are formed of horizontal planks stacked above each other, wherein:
- first of all, two preformed metallic male mechanical elements (17, 18) having substantially the height (H) of a front (19) are placed vertically at each end of a horizontal rail (22) serving as a base for the construction,
- then, a first plank (23) is inserted from the top with grooves (24, 25) inserted in bends (26, 27) of the two mechanical elements (17, 18), then the plank is slid down (arrow F) until it enters into contact with the horizontal rail (22),
- afterwards the operation is repeated with a second plank (28), which will be placed on top of the first plank (23), and so on for all the planks that must form the front height (19) through stacking,
- one proceeds in the same way and successively for all the fronts or walls to be made,
the planks of a front being assembled with the planks of a neighboring front through an assembly of the type formed:
- on the one hand, of a construction having, in cross-section, at least one angle (β) of the edge (10) extending perpendicularly to the plane of the cross-section, and having on each outer surface of the angle (β) a groove (2, 3, 24, 25, 30, 31) parallel to the edge (10),
- on the other hand, a preformed male element the cross-section of which is open, said preformed male element having over its height and along each of its end borders a bend (8, 9, 26, 27, 32, 33), which is also preformed, and each inserted into a groove (2, 24, 30, 3, 25, 31) of the construction, said cross-section being shaped so as to direct said bends towards the grooves towards the outer surfaces of the angle (β),
and the construction being obtained by the joining of two end-jointed elements and the ends to be joined of which are machined at least partially to form a bevel at an angle (β/2) and, on the other hand, the male element (11) including two planar wings (4, 5) integral with each other and forming between them a predetermined angle (α) so as to form a sort of bracket, each wing having a predetermined height (h, H) and including on each end border a bend (8, 9), also preformed at 90°, directed towards the interior of the angle (α), the angle (α) being smaller than the angle (β).

2. Method according to claim 1, wherein the angle (α) is smaller by about 5° with respect to the angle (β).

3. Method according to one of the preceding claims, wherein the assembled elements are two planks and the height (h) of the male element is smaller than the height of a plank.

4. Method according to one of claims 1 to 2, wherein the assembled elements are fronts (19) formed of a stack of planks, and the male element has substantially the height of the front.
